**Europäisches Patentamt**

(19) **European Patent Office**

**Office européen des brevets**

(11) Numéro de publication: **0 038 273**
**B1**

(12) FASCICULE DE BREVET EUROPEEN

(45) Date de publication du fascicule du brevet:
16.01.85

(51) Int. Cl.⁴: **H 02 G 1/08,** H 01 B 13/00

(21) Numéro de dépôt: **81420052.3**

(22) Date de dépôt: **08.04.81**

(54) **Appareillage destiné à débiter des longueurs de canalisations souples et à introduire un ou des éléments filiformes dans ces canalisations.**

(30) Priorité: **10.04.80 FR 8008347**
**23.01.81 FR 8101753**

(43) Date de publication de la demande:
**21.10.81 Bulletin 81/42**

(45) Mention de la délivrance du brevet:
**16.01.85 Bulletin 85/3**

(84) Etats contractants désignés:
**BE DE IT**

(56) Documents cités:
**FR - A - 1 294 480**
**FR - A - 1 421 888**
**FR - A - 2 296 351**
**FR - A - 2 307 388**

(73) Titulaire: **MODERMA, 14, rue Jean Parot,**
**F-42000 Saint-Etienne (FR)**

(72) Inventeur: **Rosaz, Stéphane, 25 cours Fauriel,**
**F-42100 Saint-Etienne (FR)**

(74) Mandataire: **Dupuis, François et al, Cabinet**
**Charras 3 Place de l'Hôtel-de-Ville, F-42000 St.Etienne**
**(FR)**

## Description

L'invention concerne un appareillage destiné à débiter des longueurs de canalisations souples et à introduire un ou des éléments filiformes dans ces canalisations tel que selon le préambule de la revendication 1 (voir le document FR-A-2 296 351).

Suivant l'invention, on a voulu réaliser rationnellement le stockage, le débit et la coupe de canalisations souples du type gaines de fils électriques par exemple, puis l'introduction d'éléments filiformes tels que lesdits fils électriques, dans la canalisation débitée.

L'invention est caractérisée selon les caractéristiques de la partie caractérisante de la revendication 1 et résout le problème consistant à créer un appareillage regroupant des organes et moyens débiteurs de fils et de gaine, un plan ou desserte de guidage de la gaine débitée, accolé à un bâti portant les mécanismes tels qu'un moyen d'entraînement de la gaine débitée, un moyen de coupe de la gaine, des moyens de serrage de la gaine débitée, des moyens d'introduction des fils dans la gaine et des moyens de mesure et de contrôle des longueurs de gaine.

Ces caractéristiques et d'autres encore ressortiront de la suite de la description qui suit.

Pour fixer l'objet de l'invention, sans toutefois le limiter, aux figures des dessins annexés:

La figure 1 est une vue en plan à caractère schématique, illustrant l'appareillage selon l'invention.

La figure 2 est une vue de face en coupe partielle du bâti porte-mécanismes.

La figure 3 est une vue en plan du bâti porte-mécanismes.

La figure 4 est une vue à plus grande échelle et en coupe illustrant un moyen de serrage de la gaine.

La figure 5 est une vue considérée suivant la ligne 5–5 de la figure 4, du moyen de serrage de la gaine.

La figure 6 est une vue en coupe à plus grande échelle, illustrant le tambour d'enroulement du moyen d'introduction des fils dans la gaine.

La figure 7 est une vue en coupe partielle du tambour selon la figure 6, montrant l'attache du moyen d'introduction des fils dans la gaine.

La figure 8 est une vue en coupe considérée suivant la ligne 8–8 de la figure 7.

La figure 9 est une vue en coupe illustrant le moyen de coupe de la gaine selon une forme de réalisation, ainsi que le moyen de mesure de longueur de gaine débitée.

La figure 10 est une vue en plan correspondant à la figure 9.

La figure 11 est une vue en coupe considérée suivant la ligne 11–11 de la figure 10, montrant le moyen de mesure selon les figures 9 et 10.

La figure 12 est une vue en plan à caractère schématique, montrant une réalisation d'un dispositif de mécanisation de la distribution de la gaine et des câbles.

La figure 13 est une vue en perspective du dispositif de distribution de la gaine et des câbles, selon une réalisation en variante.

La figure 14 est une vue en coupe à plus grande échelle montrant le montage des moyens de stockage et de dévidage de la gaine et des câbles.

La figure 15 est une vue en perspective, à grande échelle, montrant une variante de réalisation des moyens de guidage et de regroupement de la gaine et des câbles.

La figure 16 est une vue de face à petite échelle, illustrant une autre variante de réalisation du dispositif.

Selon la présente invention et dans l'exemple nullement limitatif illustré aux dessins, cet appareillage comporte essentiellement des fils électriques (E1, E2, E3, E4...) qui sont débités à partir de bobines alignées (B1, B2, B3, B4...), disposées par exemple de part et d'autre d'un touret (T) d'enroulement de la gaine (G), situé sensiblement dans l'alignement de son moyen d'entraînement fixé au bâti général (1).

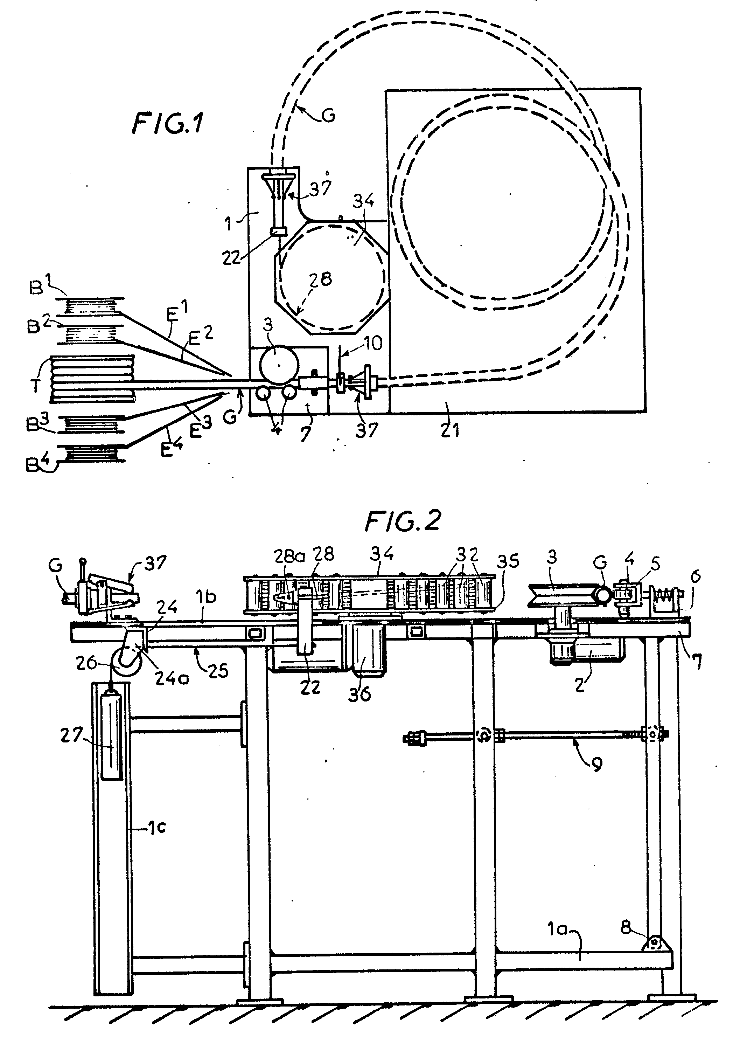

Le moyen d'entraînement de la gaine comprend selon les figures 1, 2 et 3, un ensemble moteur-réducteur (2) fixé sous le bâti (1) pour entraîner une poulie supérieure (3) dont la surface de contact avec la gaine (G), est de préférence rugueuse pour éviter son glissement. Cette gaine (G) est introduite entre la poulie (3) et deux galets de guidage (4) portés à rotation libre par un palonnier (5) monté élastiquement réglable sur un support (6) solidaire du bâti (1), afin d'être toujours en pression contre la gaine quel que soit son diamètre.

Cet ensemble d'entraînement peut également être disposé sur un bâti complémentaire (7), articulé en (8) à la partie inférieure (1a) du bâti (1), tout en étant retenu par un limiteur réglable de débattement (9). De cette manière, l'organe de coupe qui fait suite à la poulie, est parfaitement dégagé.

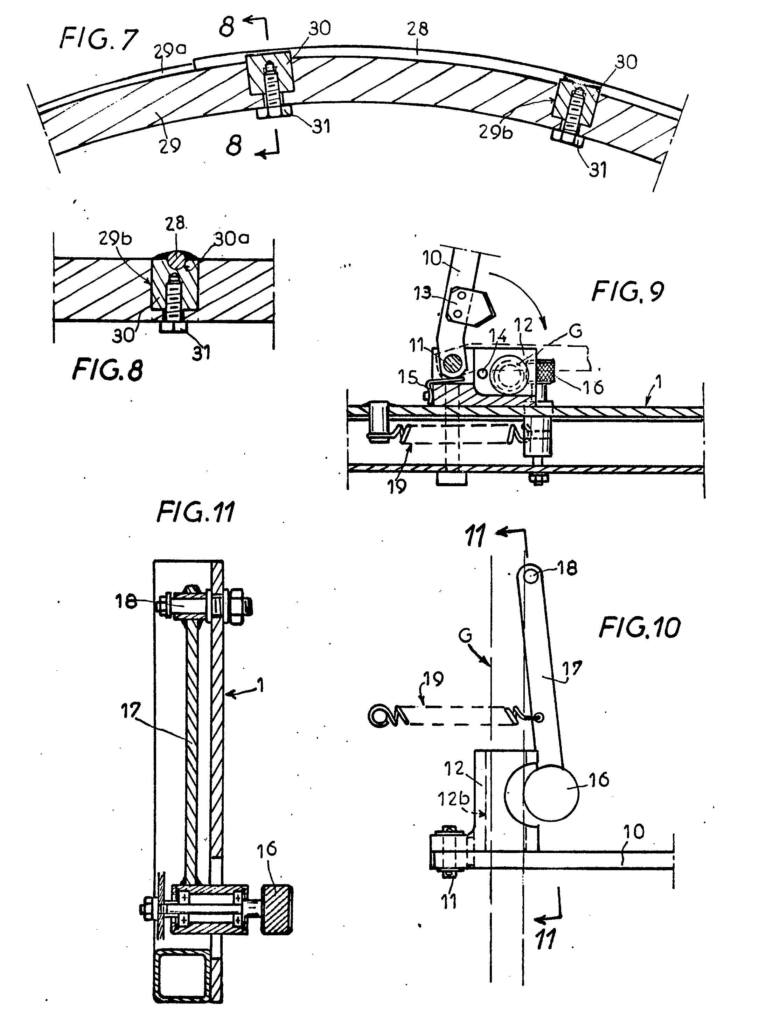

L'organe de coupe est constitué, selon la figure 9, par un levier (10) articulé en (11) sur un support de guidage (12) solidaire du bâti (1) et présentant une lame effilée (13) à pointe de pénétration dans la gaine, généralement en matériau plastique souple. Une butée de fin de course (14) est prévue pour le levier (10) et un élément élastique (15) permet de retenir temporairement le levier en position relevée.

Bien entendu, on peut prévoir en variante, d'autres organes de coupe. Par exemple, un disque de coupe entraîné par un moteur et porté par un levier de manœuvre, peut être disposé sur le bâti, la lame de coupe également peut être fixe sous la gaine, la coupe s'opérant dans ce cas, par pression d'un levier à tasseau ouvert d'appui sur la gaine.

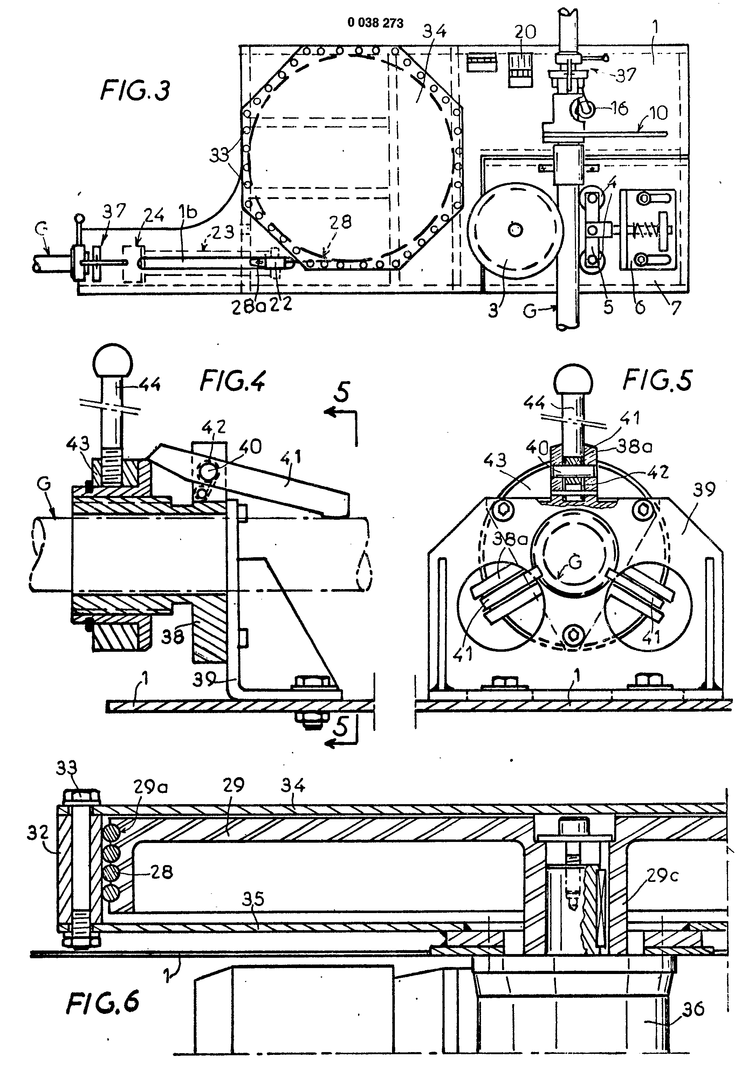

Selon la figure 10, le support de guidage (12) présente à l'arrière, une échancrure communiquant avec un orifice (12b) de passage de la gaine. Cette échancrure permet le logement d'un galet (16) porté à rotation libre en bout d'un bras (17) articulé en (18) sous le bâti (1), et maintenu constamment en appui contre la gaine (G), par un organe élastique de rappel (19) attaché au bâti (figures 9, 10 et 11). Le galet (16) à périphérie anti-glissante, est relié de manière connue à un compteur (20) (figure 3), pour mesurer la longueur de gaine à débiter.

La gaine ainsi entraînée s'étend de préférence sur un plan ou desserte (21) de guidage, accolé au bâti ou indépendant, sur lequel la gaine peut s'enrouler en un ou plusieurs tours, suivant les besoins (figure 1). Des moyens de guidage de cet enroulement peuvent être prévus sur la desserte, tels que pions, galets, rouleaux. A noter que le diamètre d'enroulement doit être proche du diamètre d'enroulement de la gaine sur le touret, afin de respecter la courbure naturelle de la gaine, en vue de l'introduction des fils dans la gaine.

La gaine débitée passe dans des moyens de serrage ou de retenue du type pinces, disposés l'un à la suite de l'organe de coupe, et l'autre, à proximité du tambour d'enroulement du moyen d'introduction des fils. Comme on le voit aux figures 1 et 2, l'extrémité de la gaine débitée, après être passée dans le deuxième moyen de serrage ou pince, est appliquée contre un taquet (22) traversant une lumière (1b) du bâti, entre ledit moyen de serrage et le tambour. A la partie inférieure, le taquet (22) est guidé à coulissement par des colonnes (23) (traits interrompus, figure 3), solidaires du taquet et traversant un palier (24) (figures 2 et 3) fixé sous le bâti. Axialement sur le taquet (22) s'attache un lien souple (25) qui s'enroule sur une poulie (26) portée à rotation libre par une chape (24a) du palier (24), et dont l'autre extrémité porte un contrepoids (27) coulissant librement dans un tube (1c) du bâti (figure 2).

A la partie supérieure, le taquet (22) est traversé par un câble (28) dont l'extrémité libre porte une tête (28a) percée d'au moins un chas d'aiguille, pour attacher le ou les fils à introduire dans la gaine (figure 2). Le câble (28) s'enroule sur un tambour (29) comprenant à cet effet, dans la hauteur de sa périphérie, une gorge (29a) hélicoïdale de guidage (figure 6). L'extrémité prisonnière du câble (28) est guidée sur le tambour par l'intermédiaire d'une gorge (29a), tout en étant rendue solidaire dudit tambour, par brasure effectuée dans une cavité (30a) formée sur deux plots (30) engagés dans des logements (29b) du tambour, et fixés par vis (31).

Le câble (28) ainsi guidé intérieurement, est d'autre part guidé à l'extérieur par appui sur des rouleaux périphériques (32) montés à rotation libre sur des axes ou boulons (33) disposés à intervalles réguliers entre deux flasques entretoisés (34, 35) s'étendant au-dessus et au-dessous du tambour, le flasque supérieur (34) étant solidaire du bâti (figure 6).

Le moyeu (29c) du tambour est calé angulairement sur l'arbre de sortie d'un moteur-réducteur (36) fixé sous le bâti et destiné à entraîner positivement dans les deux sens, le câble (28) (figure 6).

Les moyens de serrage (37) de la gaine, comprennent respectivement un corps (38) fixé sur une patte équerrée (39) solidaire du bâti (1); le corps et la patte étant percés pour le passage de la gaine. La partie du corps en appui contre la patte, forme trois chapes équidistantes (38a) dans lesquelles s'articulent en (40) des leviers-mâchoires (41) qui sont d'un côté, en appui sur la gaine avec rappel arrière, par l'intermédiaire de ressorts en épingles (42), et de l'autre côté, en appui constant sur la périphérie d'une bague (43) vissée sur le corps (38) et manœuvrable par levier (44), volant ou organe analogue, de manière à serrer ou desserrer la gaine, comme illustré à la figure 4.

Le fonctionnement de l'appareil est le suivant:

L'extrémité de la gaine (G) enroulée sur le touret (T), est disposée entre les galets (4) et la poulie (3) entraînée en rotation par son moteur-réducteur (2). La gaine (G) se déroule du touret, s'étend sur la desserte (21) après avoir traversé l'organe de coupe et le moyen de serrage, et, lorsque la longueur demandée est affichée au compteur, le moteur-réducteur (2) s'arrête automatiquement ou non. La gaine est alors introduite dans le moyen de serrage (37) situé près du tambour, puis appliquée autour de la tête (28a) de l'extrémité du câble (28) et contre le taquet (22). L'organe de coupe est commandé tandis que le bâti complémentaire (7) bascule afin de dégager l'entrée de la gaine retenue à cette extrémité par le moyen de serrage (37) situé derrière l'organe de coupe.

Le tambour (29) est alors entraîné pour dérouler le câble (28) qui pénètre par sa tête (28a) dans la gaine, ladite tête étant constamment poussée par le taquet (22) rappelé par le contrepoids (27). Le taquet (22) pousse également dans ce mouvement, l'extrémité de la gaine, jusqu'à ce qu'il bute au fond de la lumière (1b) du bâti.

Lorsque le câble sort à l'autre extrémité de la gaine, on déroule les fils électriques (E1, E2...) de leurs bobines (B1, B2...) et on les attache sur le ou les chas de la tête (28a) du câble. On actionne ensuite le tambour en sens inverse, pour ramener le câble (28) avec ses fils électriques, à l'autre extrémité de la gaine. En fin de course, la tête (28a) pousse le taquet (22) à l'encontre du contrepoids (27), jusqu'à ce qu'un contacteur de fin de course provoque l'arrêt du moteur-réducteur (36).

Il ne reste plus qu'à couper les fils électriques à l'extrémité de la gaine située vers l'organe de coupe, et à détacher lesdits fils de la tête du câble.

De nombreuses variantes peuvent être introduites dans le cadre de l'invention, comme on l'a vu pour l'organe de coupe, la tête de câble, et la desserte de guidage de la gaine. On peut encore prévoir un bâti roulant pour faciliter les déplacements sur chantier, des galets de guidage de gaine réglables en position, indépendamment des ressorts de rappel, le couplage de plusieurs ensembles tambour-poulie d'entraînement de gaine-organes de serrage, ou la lubrification du tambour pour favoriser le glissement (manuel ou par cartouches)...

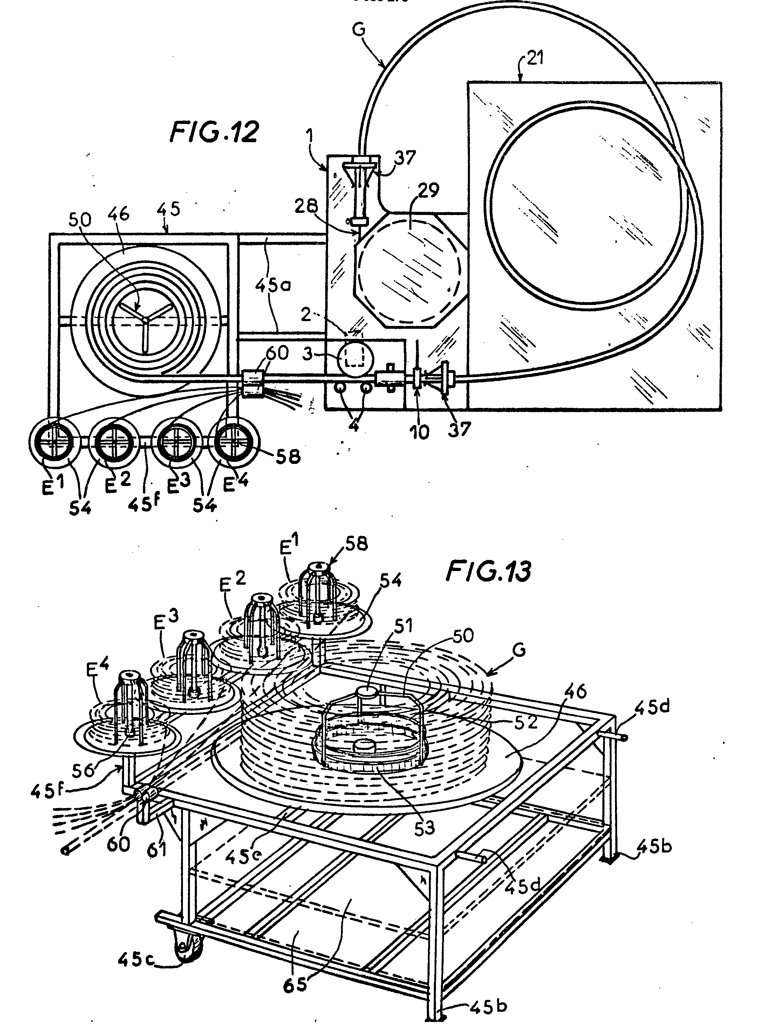

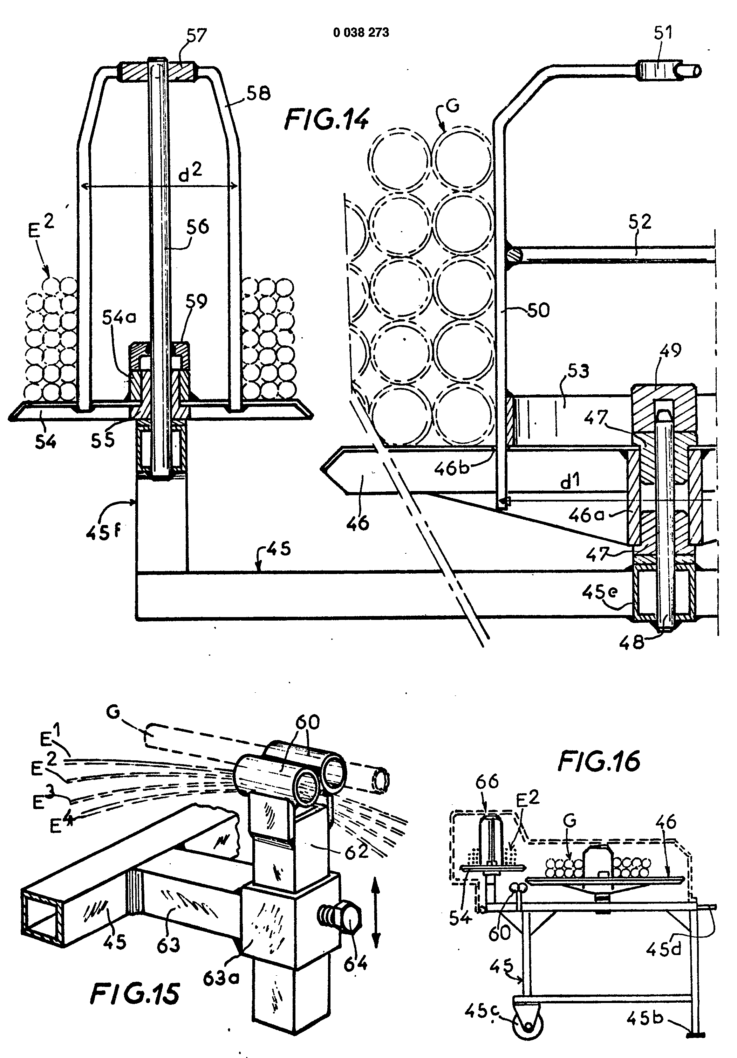

Selon l'invention, on a également prévu un dispositif de stockage et de distribution de la gaine (G) et des câbles (E1, E2, E3, E4...), ce dispositif étant soit fixe comme illustré à la figure 12, soit mobile comme illustré figures 13 et 16.

Dans les deux cas, le dispositif comprend un bâti (45) constitué de fers profilés dont la partie supérieure reçoit les moyens de stockage et de distribution de la gaine et des câbles.

Dans le cas où ce bâti est fixe, il présente des prolongements (45a) de liaison avec le bâti (1), tandis que lorsqu'il est mobile, la partie inférieure forme d'un côté un piètement fixe (45b), et de l'autre, un piètement à roulettes (45c); le bâti étant manœuvré par des poignées de préhension (45d).

Dans la partie centrale équipée d'une traverse (45e), est monté à rotation libre, un plateau horizontal (46) de grand diamètre, présentant à cet effet un moyeu (46a) équipé à ses deux extrémités de bagues de roulement (47) montées tournantes sur un axe (48) solidaire de la traverse (45e), tandis qu'un capuchon supérieur (49) est engagé sur l'extrémité débordante de l'axe (48) pour protéger le pivot des salissures ambiantes (figure 14).

Sur le dessus du plateau (46) sont percés au moins trois orifices équidistants (46b) établis sur un diamètre (d1) et destinés à recevoir des arceaux (50) se rejoignant à leur partie supérieure recourbée, sur une bague de liaison (51), et qui sont entretoisés par un cerclage intermédiaire (52). Les arceaux sont retenus dans le sens vertical, par une couronne (53) de liaison des arceaux (50), pour coopérer en appui sur le plateau (46).

On comprend qu'ainsi on peut disposer et centrer sur le plateau (46), un rouleau de gaine (G) de diamètre intérieur légèrement supérieur au diamètre (d1) qui pourra être aisément déroulé au fur et à mesure des besoins, par simple traction sur l'extrémité libre.

A une extrémité du bâti (45), une partie surélevée (45f) formant portique, reçoit à rotation libre dans sa longueur, plusieurs plateaux horizontaux et alignés (54) dont le moyeu (54a) est équipé d'une bague de roulement (55) ou organe similaire, montée tournante sur un axe (56) solidaire du portique (45f) et dont l'extrémité supérieure est emmanchée dans une bague (57) reliant quatre arceaux (58) fixés sur ou à travers le plateau (54), suivant un diamètre (d2) légèrement inférieur au diamètre intérieur du ou des rouleaux de câbles superposés (E1, E2, E3, E4...) qui peuvent ainsi être disposés et centrés sur les plateaux (54).

Comme pour le plateau (46), il est prévu une bague d'étanchéité (59), au-dessus du moyeu (54a) et autour de l'axe (56), afin d'éviter les infiltrations dans le pivot.

La gaine (G) d'abord, puis les câbles (E1, E2, E3, E4...) déroulés des moyens de stockage et de distribution, doivent être acheminés vers le bâti (1) pour être mesurés, intégrés et coupés. Pour effectuer ces opérations rapidement et avec le maximum d'efficacité, on prévoit de guider les déplacements de la gaine et des câbles. Pour cela, le bâti (45) présente latéralement, du côté du bâti et entre les plateaux (46 et 54), des tubes de guidage (60) accolés et portés de préférence en avant du bâti (45), par un bras équerré (61). Ces tubes (60) sont disposés sensiblement dans l'alignement des moyens d'entraînement (3, 4) de la gaine et ont des entrées largement arrondies pour éviter toute détérioration des câbles et de la gaine.

On comprend que l'un des tubes (60) est traversé par la gaine, tandis que les câbles à gainer traversent l'autre tube (60).

Comme illustré figure 15, la position des tubes de guidage (60) peut être réglable afin d'obtenir toujours un déroulement correct sans déviations importantes de la gaine.

A cet effet, les tubes de guidage sont par exemple, portés par un tube vertical (62) coulissant dans un fourreau (63a) exécuté en bout d'un bras horizontal (63) et bloqué en position désirée par tous moyens tels que vis (64).

On peut encore prévoir, comme illustré en traits interrompus à la figure 13, un ou des rayonnages (65) dans la hauteur du bâti (45), afin de stocker en attente des rouleaux de gaines et de câbles. Cette partie de stockage peut également être fermée de toutes parts (parois pleines ou grillagées) avec une porte d'accès munie ou non de moyens de verrouillage.

Toujours dans un but de sécurité contre les vols (fréquents sur les chantiers), on peut équiper le dispositif d'un capot (66) verrouillable et articulé au bâti, englobant soit l'ensemble des plateaux (46, 54), comme illustré figure 16, soit seulement le plateau de stockage de la gaine, du fait de son poids et de son encombrement rendant moins aisées les manutentions.

Les avantages ressortent bien de la description, on souligne notamment:
- le stockage et la distribution rationnels des câbles et de la gaine;
- le passage aisé du câble dans la gaine, par le guidage de ladite gaine sur une desserte, lui permettant de conserver sa courbure naturelle;
- le serrage ou maintien rapide et fonctionnel des extrémités de la gaine, par les organes de serrage;
- la liaison facilitée des fils avec la tête de câble, par le dégagement de l'extrémité de gaine obtenu par basculement du bâti complémentaire;
- le regroupement rationnel des moyens autour et sur un bâti général transportable.

## Revendications

1. Appareillage destiné à débiter des longueurs de canalisations souples (G) et à introduire un ou des éléments filiformes (E1, E2, E3, E4...) dans ces canalisations, du type comprenant un moyen d'entraînement et un organe de coupe de la canalisation souple, un moyen d'introduction mécanisée du ou des éléments filiformes dans la canalisation, et des moyens de mesure et de contrôle des longueurs débitées, caractérisé en ce que chaque gaine ou canalisation souple (G) débitée depuis un touret (T) ou par un dispositif mécanique de stockage et de distribution, est maintenue à ses extrémités par deux moyens de serrage du type pinces (37), disposés l'un, immédiatement derrière l'organe de coupe (C), et l'autre, à proximité du moyen d'introduction mécanisée du ou des éléments filiformes, après s'être étendue selon une courbure naturelle et suivant un ou plusieurs tours, sur un plan de guidage et de repos (21); le moyen d'introduction du ou des éléments filiformes, du type câble (28) à tête d'attache (28a) du ou des fils, est commandé et guidé positivement dans les deux sens, par un tambour rotatif (29) et par un dispositif à contrepoids (27).

2. Appareillage selon 1, caractérisé en ce que le tambour (29) d'enroulement ou de déroulement du câble (28) à tête (28a), présente à sa périphérie une gorge hélicoïdale (29a) pour le logement partiel et le guidage du câble (28) qui y est attaché par brasure ou moyen similaire, de par son extrémité, sur des plots (30) vissés ou autrement fixés dans l'épaisseur de la périphérie dudit tambour; la partie extérieure dudit câble (28) étant en contact avec des rouleaux périphériques (32) montés à rotation libre sur des axes (33) disposés à intervalles réguliers entre deux flasques entretoisés (34, 35) s'étendant au-dessus et au-dessous dudit tambour (29), le flasque supérieur (34) étant solidaire du bâti (1).

3. Appareillage selon 1, caractérisé en ce que les pinces ou moyens de serrage (37) de la gaine (G) débitée et coupée, sont constitués chacun par un corps (38) fixé sur une patte équerrée (39) solidaire du bâti, le corps et la patte étant percés pour le passage de la gaine, ledit corps présentant du côté d'appui sur la patte, trois chapes équidistantes (38a) pour l'articulation de trois leviers-mâchoires (41) dont une extrémité est en appui constant contre une bague de manœuvre (43) vissée dans le corps et manœuvrée par tous moyens tels que levier (44), tandis que l'autre extrémité prend appui sur la gaine et la maintient sous l'effet de vissage de la bague.

4. Appareillage selon 1, caractérisé en ce que le moyen d'entraînement de la gaine ou canalisation souple (G) est constitué par une poulie motrice (3) dont la surface de contact avec la gaine est prévue pour éviter tout glissement; ladite gaine étant introduite entre cette poulie et deux galets de guidage (4) portés à rotation libre par un palonnier (5) monté de manière réglable et élastiquement sur un support (6) solidaire du bâti.

5. Appareillage selon 1 et 4, caractérisé en ce que l'ensemble du moyen d'entraînement de la gaine (G) est monté sur un bâti complémentaire (7) articulé en (8) à la partie inférieure du bâti (1) et retenu par un limiteur de débattement (9), afin de dégager l'entrée de la gaine (G) lorsqu'elle a été coupée à la longueur.

6. Appareillage selon 1, caractérisé en ce que la tête (28a) du câble (28) est poussée constamment à l'introduction dans la gaine (G) par un taquet (22) guidé dans une lumière (1b) du bâti général et mobile, par des colonnes (23) coulissant dans un palier (24) solidaire du bâti (1) et portant une poulie de renvoi (26) pour le lien souple (25) du contrepoids (27) qui est attaché au taquet (22).

7. Appareillage selon 1, caractérisé en ce que l'organe de coupe de la gaine (G) est constitué par une lame effilée (13) portée par un levier (10) articulé à un support de guidage (12) solidaire du bâti général (1) et présentant une butée de fin de course (14) pour le levier en position abaissée, et un cran d'arrêt tel qu'un élément élastique (15) pour maintenir le levier en position relevée.

8. Appareillage selon 1, caractérisé en ce que l'organe de coupe de la gaine (G) est constitué par un disque animé par un moteur et porté par un levier de manœuvre.

9. Appareillage selon 1, caractérisé en ce que l'organe de coupe de la gaine (G) est constitué par une lame fixe disposée sous la gaine qui est coupée par appui en pression d'un tasseau ouvert manœuvré par un levier.

10. Appareillage selon 1, caractérisé en ce que le moyen de mesure de longueur de gaine (G) débitée, est constitué par un galet (16) articulé élastiquement par rapport au bâti (1) et engagé partiellement dans une échancrure du support (12) de l'organe de coupe traversé par la gaine; le galet étant relié à un compteur.

11. Appareillage selon 1, caractérisé en ce que le touret (T) de stockage de la gaine (G) est situé dans l'alignement de la poulie (3) de l'organe de coupe (C) et d'une pince (37), tandis que les bobines (B1), (B2), (B3), (B4)... de stockage des fils sont réparties de part et d'autre du touret.

12. Appareillage selon 1, caractérisé en ce que le dispositif de stockage et de distribution de la gaine et des câbles, est disposé sur un bâti indépendant (45), fixe ou mobile, relié ou non au bâti (1), et qui présente un moyen de stockage (46) et de dévidage du rouleau de gaine, dont l'extrémité libre est placée sensiblement dans l'alignement de son organe d'entraînement (3, 4) fixé sur le bâti, des moyens (54) de stockage et de dévidage des rouleaux de câbles, et des moyens (60) de guidage et de regroupement de la gaine et des câbles entre le bâti (45) et le bâti principal (1).

13. Appareillage selon 1 et 12, caractérisé en ce que les moyens de stockage et de distribution de la gaine (G) et des câbles (E1, E2, E3, E4) sont constitués par des plateaux horizontaux (46, 54) montés à rotation libre sur des éléments de la face supérieure du bâti (45); le plateau (46) destiné à porter le rouleau de gaine, est de grand diamètre et tourne sur une traverse centrale (45e) du bâti (45), tandis que les plateaux (54) destinés à porter les rouleaux de câbles, sont alignés et tournent sur l'élément supérieur d'une partie surélevée (45f) du bâti (45).

14. Appareillage selon 12, caractérisé en ce que les pivots des plateaux (46, 54) sont constitués par des moyeux (46a–54a) à bagues de roulement (47, 55), tournant de manière étanche sur des axes (48, 56) solidaires des éléments porteurs (45e, 45f).

15. Appareillage selon 12, caractérisé en ce que les plateaux porte-gaine (46) et porte-câbles (54) reçoivent des arceaux équidistants (50, 58) convenablement entretoisées et posés en butée sur le plateau ou solidarisés au plateau, destinés à centrer les rouleaux de gaine et de câbles.

16. Appareillage selon 12, caractérisé en ce que les moyens de guidage et de regroupement des câbles et de la gaine, sont constitués par des tubes de guidage accolés (60) portés de préférence à l'extérieur du bâti (45), du côté du bâti principal (1), par un bras équerré (61); lesdits tubes étant situés entre le plateau (46) et les plateaux (54), tout en étant réglables verticalement par tous moyens tels que tube-support (62) coulissant dans un fourreau vertical (63a) équipant l'extrémité d'un bras horizontal (63) débordant du bâti (45).

17. Appareillage selon 12, caractérisé en ce que le plateau porte-gaine (46) et éventuellement les plateaux porte-câbles (54), sont enfermés dans un capot de sécurité (66) articulé au bâti (45).

18. Appareillage selon 1 et 12, caractérisé en ce que le bâti (45) présente dans sa hauteur un ou des rayonnages intermédiaires (65) de stockage des rouleaux de gaine et de câbles, tout en étant fermé par des parois pleines ou grillagées, dont au moins une est équipée d'une porte de préférence verrouillable, afin de stocker les rouleaux en toute sécurité.

## Claims

1. Apparatus designed for cutting off flexible pipes (G) and inserting one or more filiform elements (E1, E2, E3, E4...) in these pipes, of the type including driving means and cutting off means of the flexible pipe, a mechanized inserting means for the filiform element(s) into the pipe, and measuring and checking means for the cut-off lengths, wherein each flexible sheath or pipe (G) cut off from a drum (T) or by a mechanical storing and feeding device, is held at its ends by two collet type clamping means (37), one of them arranged right behind the cutting means (C), and the other one close to the mechanized inserting means of the filiform element(s), after having spread out according to a natural curve and following one or more turns, on a guide and rest plane (21); the inserting means of the filiform element(s), of cable type (28) with fastening head (28a) of the thread(s), is positively driven and guided in both directions by a rotary drum (29) and a counterweight type device (27).

2. Apparatus as per claim 1, wherein the cable (28) with head (28a) winding or unwiding drum (29) is provided on its periphery with a helical groove (29a) for partial housing and guiding of the cable (28) fixed thereto by brazing or similar means, by its end, on blocks (30) screwed or otherwise fixed into the thickness of the drum periphery; the external part of said cable (28) being in connection with peripheral rollers (32) freely rotating on bolts (33) arranged at regular intervals between two braced flanges (34, 35) arranged above and below said drum (29), the top flange (34) being integral with the frame (1).

3. Apparatus as per claim 1, wherein the collets or clamping means (37) of the cut off sheath (G) are each composed of a body (38) fixed to a square lug (39) integral with the frame, the body and the lug being drilled for free passage of the sheath, said body provided on the end resting on the lug with three equally spaced yokes (38a) for articulation of three levers acting as jaws (41), one end of which constantly bearing against a drive bush (43) screwed into the body, operated by any means such as a lever (44), whereas the other end rests on the sheath and maintains it under the screwing on effect of the bush.

4. Apparatus as per claim 1, wherein the driving means for the sheath or flexible pipe (G) is composed of a drive pulley (3) whose surface of contact with the sheath is designed so as to prevent slippage; said sheath being introduced between this pulley and two freely rotating guide rolls (4) adjustably and elastically fitted in a yoke (5) on a support (6) integral with the frame.

5. Apparatus as per claims 1 and 4, wherein the sheath (G) driving assembly is mounted on an additional frame (7), hinged at (8) in the frame (1) lower part and retained by a motion limiter (9) in order to clear the sheath (G) entrance when cut to length.

6. Apparatus as per claim 1, wherein the head (28a) of the cable (28) is constantly pushed to be inserted into the sheath (G) by a pusher (22) guided in a slot (1b) of the main frame, moved by columns (23) guided in a bearing (24) integral with the frame (1) holding a return pulley (26) for the counterweight (27) flexible cord (25) fixed to the pusher (22).

7. Apparatus as per claim 1, wherein the sheath (G) cutting device is composed of a sharp blade (13) held by a lever (10) articulated in a guiding support (12) integral with the main frame (1) and provided with a stroke end stop (14) for the lever in lower position, and a catch such as an elastic retainer (15) for maintaining the lever in the raised position.

8. Apparatus as per claim 1, wherein the sheath (G) cutting device is composed of a motor driven disk and held by a control lever.

9. Apparatus as per claim 1, wherein the sheath (G) cutting device is composed of a fixed blade arranged below the sheath cut by the bearing pressure of a lever operated open block.

10. Apparatus as per claim 1, wherein the measuring means for the length of the cut off sheath (G) is composed of a roller (16) elastically articulated with respect to the frame (1) and partially engaged in a recess in the support (12) of the cutting device crossed by the sheath; the roller being connected to a counter.

11. Apparatus as per claim 1, wherein the sheath (G) storage drum (T) is aligned with the pulley (3) of the cutting device (C) and a collet (37), whereas thread storage wheels (B1), (B2), (B3), (B4)... are arranged on either side of the drum.

12. Apparatus as per claim 1, wherein the sheath and cable storing and feeding device is arranged on an independent frame (45), fixed or mobile, connected to the frame or not, and which is provided with a sheath roll storing and unwiding means (46), the free end of which is substantially aligned with its driving means (3, 4) fixed to the frame, cable roll storing and unwiding means (54), and sheath and cable guiding and grouping means (60) between the frame (45) and the main frame (1).

13. Apparatus as per claims 1 and 12, wherein the sheath (G) and cable (E1, E2, E3, E4) storing and feeding means are composed of horizontal plates (46, 54) rotating freely on elements of the frame top face (45); the plate (46) provided for carrying the sheath roll has a large diameter and rotates on the central cross member (45e) of the frame (45), whereas the plates (54) designed to hold the cable rolls are aligned and rotate on the upper element of a raised part (45f) of the frame (45).

14. Apparatus as per claim 12, wherein the plate (46, 54) pivot pins are composed of hubs (46a–54a) fitted with bearing rings (47, 55), rotating tightly on shafts (48, 56) integral with the carrying elements (45e, 45f).

15. Apparatus as per claim 12, wherein the sheath and cable holding plates (46, 54) are fitted with equally spaced bows (50, 58) suitably braced and abutting against the plate or integral with the plate, designed for centering the sheath and cable rolls.

16. Apparatus as per claim 12, wherein the cable and sheath guiding and grouping means are composed of coupled guide tubes (60) preferably carried outside of the frame (45), on the main frame end (1), by a square arm (61); said tubes being located between the plate (46) and the plates (54), while being vertically adjustable by any means such as a sliding support tube (62) fitted in a vertical sleeve (63a) arranged at the end of a horizontal arm (63) projecting from the frame (45).

17. Apparatus as per claim 12, wherein the sheath holding plate (46) and possibly the cable holding plates (54) are enclosed in a safety casing (66) hinged to the frame (45).

18. Apparatus as per claims 1 and 12, wherein the frame (45) is provided in its height with one or more intermediate storage racks (65) for sheath and cable rolls, while being closed by solid or latticed walls, of which one at least is fitted with a door, preferably of the locking type, in order to store the rolls in complete safety.

**Patentansprüche**

1. Gerät zum Ablängen von Schlauchleitungen (G) und zum Einführen eines oder mehrerer fadenförmiger Elemente (E1, E2, E3, E4,...) in diese Leitungen; einer Ausführung bestehend aus einer Treibvorrichtung und einem Schlauchschneide-Organ, einer Vorrichtung zum mechanisierten Einführen des oder der fadenförmigen Elemente in die Leitung und Mess-und Kontrollvorrichtungen für die abgelängten Teile, dadurch gekennzeichnet, dass jeder Schlauchmantel bzw. jede Schlauchleitung (G), welche/r ausgehend von einer Trommel (T) bzw. einer mechanischen Lagerungs- und Abgabevorrichtung abgelängt wird, an seinen/ihren Enden durch zwei Greifvorrichtungen zangenmässiger Ausführung (37), von welchen eine direkt hinter dem Schneidorgan (C) und die andere nahe der mechanisierten Einführungsvorrichtung für das bzw. die fadenförmigen Elemente befindlich ist, festgehalten wird, nachdem er/sie sich einer natürlichen Biegung in ein oder zwei Schlingen auf einer Führungs- und Auflagefläche (21) folgend entlangbewegt hat; die Einführungsvorrichtung für das bzw. die fadenförmigen Elemente, vom Typ Kabel (28) mit Anschlusskopf (28a) für den oder die Fäden, wird durch eine Drehtrommel (29) und eine Vorrichtung mit Gegengewicht (27) angetrieben und positiv in beiden Richtungen geführt.

2. Gerät nach Anspruch 1, dadurch gekennzeichnet, dass die Trommel (29) zum Auf- bzw. Abwickeln des Kabels (28) mit Kopf (28a) an seinem Umfang eine Spiralkehle (29a) zur teilweisen Aufnahme und zur Führung des Kabels (28) aufweist, welches darin mittels Lötung oder ähnlichen Verfahrens an seinem Ende an Knöpfen (30) befestigt ist, die durch Schraubung oder ähnliches Verfahren an der dicken Partie dieser Trommel befestigt sind; dabei steht der äussere Teil dieses Kabels (28) in Kontakt mit peripheren Rollen (32), die freidrehend auf Achsen (33) gelagert sind, welche in regelmässigen Abständen zwischen zwei Seitenwänden (34, 35) angeordnet sind und sich über und unter dieser Trommel (29) hinstrekken, wobei die obere Wand (34) mit dem Rahmen (1) fest verbunden ist.

3. Gerät nach Anspruch 1, dadurch gekennzeichnet, dass die Zangen bzw. Greifvorrichtungen (37) der abgewickelten und geschnittenen Leitung (G) aus jeweils einem Körper (38) bestehen, der auf einer fest mit dem Rahmen verbundenen Ecklasche (39) befestigt ist, wobei der Körper sowie die Lasche zum Durchführen der Leitung Bohrungen aufweisen und der Körper an der Seite, mit welcher er auf der Lasche aufliegt, drei in gleichen Abständen angebrachte Gabeln (38a) für die gelenkmässige Bewegung von drei Klemmhebeln (41) trägt, deren eines Ende ständig auf einem in den Körper eingeschraubten und ein beliebiges Mittel wie z. B. einen Hebel (44) bewegten Stellring aufliegt, während das andere Ende auf die Leitung drückt und sie unter der Schraubwirkung des Rings festhält.

4. Gerät nach Anspruch 1, dadurch gekennzeichnet, dass die Treibvorrichtung für den Schlauchmantel bzw. die Schlauchleitung (G) aus einer Antriebsrolle (3) besteht, deren mit dem Mantel in Kontakt stehende Fläche so beschaffen ist, dass jegliches Rutschen vermieden wird; dabei wird die Leitung zwischen dieser Rolle und zwei Führungsrollen (4) eingeführt, welche durch ein schwingendes Element (5), das einstellbar und elastisch auf einen mit dem Rahmen fest verbundenen Träger (6) gelagert ist, in freie Drehung versetzt werden.

5. Gerät nach Ansprüchen 1 und 4, dadurch gekennzeichnet, dass das gesamte Aggregat zur Führung der Leitung (G) auf einem zusätzlichen Rahmen (7) befestigt ist, welcher in (8) am unteren Rahmenteil (1) ein Gelenk aufweist und durch eine Vorrichtung zur Begrenzung der Bewegungsfreiheit (9) festgehalten wird, um den Eintritt der Leitung (G) freizuhalten, wenn diese auf die gewünschte Länge zugeschnitten wurde.

6. Gerät nach Anspruch 1, dadurch gekennzeichnet, dass der Kopf (28a) des Kabels (28) stetig zum Einführen in die Leitung (G) gezwungen wird, dies durch einen Treiber (22), der in einem Schlitz (1b) des Hauptrahmens beweglich durch Stützen (23) geführt wird, welche in einem mit dem Rahmen (1) fest verbundenen Lager (24) gleiten und mit einer Umlenkrolle (26) für die geschmeidige Verbindung (25) des Gegengewichtes (27), das an dem Treiber (22) befestigt ist, versehen sind.

7. Gerät nach Anspruch 1, dadurch gekennzeichnet, dass das Schneidorgan für die Leitung (G) durch eine spitz verlaufende Schneide (13) gebildet wird, welche an einem Hebel (10) befestigt ist, der gelenkig mit einer mit dem Hauptrahmen (1) fest verbundenen Führung (12) verbunden ist, welche einen Anschlag (14) für das Hubende des in niedergeführter Stellung befindlichen Hebels sowie eine Sperrklinke beispielsweise bestehend aus einem elastischen Element (15) zum Festhalten des Hebels in angehobener Stellung aufweist.

8. Gerät nach Anspruch 1, dadurch gekennzeichnet, dass das Schneidorgan für die Leitung (G) aus einer durch einen Motor angetriebenen und durch einen Stellhebel gestützten Scheibe besteht.

9. Gerät nach Anspruch 1, dadurch gekennzeichnet, dass das Schneidorgan für die Leitung (G) aus einer fest angeordneten, unter der Leitung befindlichen Schneide besteht, wobei die Leitung durch Druck, der durch einen mittels Hebels bedienten offenen Stöckel geschnitten wird.

10. Gerät nach Anspruch 1, dadurch gekennzeichnet, dass die Vorrichtung zum Messen der abgelängten Menge der Leitung (G) aus einer Rolle (16) besteht, welche gegenüber dem Rahmen elastisch gelenkig gelagert und teilweise in eine Aussparung der Halterung (12) des von der Leitung durchlaufenen Schneidorganträgers eingefügt ist; dabei ist die Rolle mit einem Zähler verbunden.

11. Gerät nach Anspruch 1, dadurch gekennzeichnet, dass die Trommel (T) zur Lagerung der Leitung (G) mit der Rolle (3) des Schneidorgans (C) und einer Zange (37) gefluchtet ist, wogegen die Spulen (B1), (B2), (B3), (B4)... zur Lagerung der Drähte beiderseits der Trommeln angeordnet sind.

12. Gerät nach Anspruch 1, dadurch gekennzeichnet, dass die Lager- und Abgabevorrichtung der Leitung und der Kabel auf einem unabhängigen Gestell (45) angeordnet ist, welcher fest angeordnet oder beweglich, mit dem Rahmen (1) verbunden oder nicht verbunden sein kann und welche eine Vorrichtung zur Lagerung (46) und zum Abwickeln der Leitungsrolle aufweist, deren freies Ende sich augenscheinlich in der Fluchtlinie ihres am Rahmen befestigten Antriebsorganes (3, 4), der Vorrichtung (54) zur Lagerung und zum Abwikkeln der Kabelrollen und der Vorrichtungen (60) zur Führung und zum Zusammenführen der Leitung und der Kabel zwischen dem Rahmen (45) und dem Hauptrahmen (1) befindet.

13. Gerät nach Ansprüchen 1 und 12, dadurch gekennzeichnet, dass die Lager- und Aufgabevorrichtung der Leitung (G) und der Kabel (E1, E2, E3, E4) aus horizontalen Platten (46, 54) bestehen, welche frei drehend auf Elementen der Oberfläche des Rahmens (45) gelagert sind; hierbei besitzt die Platte (46) zur Aufnahme der Leitungsrolle einen grossen Durchmesser und dreht auf einer zentralen Querstrebe (45e) des Rahmens (45), wogegen die Platten (54) zur Aufnahme der Kabelrollen in einer Reihe angeordnet sind und auf dem oberen Element eines überhöhten Teils (45f) des Rahmens (45) drehen.

14. Gerät nach Anspruch 12, dadurch gekennzeichnet, dass die Zapfen der Platten (46, 54) aus Naben (46a, 54a) mit Lagerbüchsen (47, 55) bestehen, welche unter Vorhandensein von Dichtigkeit auf Achsen (48, 56) drehen, die mit den tragenden Elementen (45e, 45f) fest verbunden sind.

15. Gerät nach Anspruch 12, dadurch gekennzeichnet, dass die Platten zur Aufnahme der Leitung (46) und der Kabel (54) in gleichen Abständen angebrachte Bogenteile (50, 58) tragen, welche sachgerecht mit Abstandstücken ausgerüstet sind und mit der Platte in Anschlag stehen bzw. mit der Platte fest verbunden sind und welche zur Zentrierung der Leitungs- und Kabelrollen dienen.

16. Gerät nach Anspruch 12, dadurch gekennzeichnet, dass die Vorrichtungen zur Führung und zur Zusammenführung der Kabel und der Leitung aus angesetzten Führungsrohren (60) bestehen, welche vorzugsweise an der Aussenseite des Rahmens (45) seitens des Hauptrahmens (1) durch einen Winkelarm (61) angebracht sind; dabei befinden sich diese Rohre zwischen der Platte (46) und den Platten (54) und sind vertikal verstellbar, dies durch jegliches Mittel wie z.B. ein Tragrohr (62), welches in einer vertikalen Hülse (63a) gleitet, die sich am Ende eines horizontalen, über den Rahmen (45) herausragenden Armes (63) befindet.

17. Gerät nach Anspruch 12, dadurch gekennzeichnet, dass die Platte zur Aufnahme der Leitung (46) sowie gegebenenfalls die Platten zur Aufnahme der Kabel (54) unter einer gelenkig am Rahmen (45) befindlichen Schutzabdeckung (66) angebracht sind.

18. Gerät nach Ansprüchen 1 und 12, dadurch gekennzeichnet, dass der Rahmen in Richtung seiner Höhe eine oder mehrere Zwischen-Lagerungsflächen (65) für die Leitungs- und Kabelrollen aufweist, wobei das Abschliessen durch Voll- oder Gitterwände erfolgt, von welchen mindestens eine mit einer vorzugsweise abschliessbaren Tür ausgerüstet ist, um das Lagern der Rollen in absoluter Sicherheit zu ermöglichen.

0 038 273

FIG.1

FIG.2

9

FIG.3

FIG.4

FIG.5

FIG.6

FIG.7

FIG.8

FIG.9

FIG.11

FIG.10

**FIG.12**

**FIG.13**

FIG.14

FIG.16

FIG.15